# EUROPÄISCHE PATENTSCHRIFT

(11) **EP 2 310 935 B1**
(45) Veröffentlichungstag und Bekanntmachung des Hinweises auf die Patenterteilung: **17.10.2018**
(21) Anmeldenummer: 09776992.1
(22) Anmeldetag: 07.07.2009
(51) Int. Cl.: G06F 3/0485, G06F 3/0488

(54) **VERFAHREN ZUR VERGRÖSSERUNG EINES DARSTELLUNGSBEREICHS AUF EINER DARSTELLUNGSEINRICHTUNG**
METHOD FOR ENLARGING A DISPLAY REGION ON A DISPLAY UNIT
PROCÉDÉ POUR AGRANDIR UNE ZONE DE REPRÉSENTATION SUR UN DISPOSITIF DE REPRÉSENTATION

(30) Priorität: 06.08.2008 DE 102008036600; 07.01.2009 DE 102009003995
(43) Veröffentlichungstag der Anmeldung: 20.04.2011
(73) Patentinhaber: Rohde & Schwarz GmbH & Co. KG, 81671 München (DE)
(72) Erfinder: LAINER, Kurt, 85551 Kirchheim (DE)
(74) Vertreter: Beder, Jens
(86) Internationale Anmeldenummer: PCT/EP2009/004888
(87) Internationale Veröffentlichungsnummer: WO 2010/015303

(56) Entgegenhaltungen:
- EP-A2- 1 517 228
- US-A1- 2006 022 955
- US-A1- 2006 044 283
- US-A1- 2007 038 955
- US-A1- 2007 198 950
- US-A1- 2008 094 368
- US-B1- 6 252 594
- US-B1- 6 704 034

## Beschreibung

Die Erfindung betrifft ein Verfahren zur Vergrößerung eines Darstellungsbereichs auf einer Darstellungseinrichtung.

Aus den Druckschriften US 2006/0022955 und US2007/0198950 sind Verfahren bekannt, mit dem ein Darstellungsbereich einer graphischen Benutzeroberfläche auf einem Touchscreendisplay zeitweise vergrößert werden kann. Dazu wird eine Berührung des Touchscreendisplays detektiert und ein begrenzter Darstellungsbereich der graphischen Benutzeroberfläche, welcher sich um eine Berührungszone herum befindet, vergrößert. Die Vergrößerungsfunktion entspricht einer virtuellen Lupe, deren Ort und Bewegung durch die Berührung des Touchscreendisplays bestimmt wird. Die Zeitdauer der Vergrößerung entspricht dabei der Zeit, während der der Touchscreen berührt wird, plus einer Verzögerungszeit. Die Vergrößerungsfunktion führt entweder zu einer Vergrößerung eines Darstellungsbereichs, ohne Rücksicht auf die Relevanz von dargestellten Objekten bzw. Informationseinheiten, oder zu einer Vergrößerung eines Objektes.

Aus der Druckschrift US 2008/0094368 ist ein Verfahren bekannt, in dem die Schriftgröße des Darstellungsbereiches einer graphischen Benutzeroberfläche vergrößert werden kann.

Aus der Druckschrift US 6,704,034 ist ein Verfahren zur Präsentation einer Gruppe von Objekten bekannt.

Die Vergrößerung von einzelnen ausgewählten Objekten erfolgt entsprechend einem erkannten Objekttyp.

Die Offenlegungsschrift US 2006/0044283 offenbart ein Verfahren in dem zwei Darstellungsbereiche alternativ zwischen einer reduzierten Wiedergabe und einer vergrößerten Wiedergabe zur Benutzung der Bedienelemente entsprechend einer Auswahl umgeschaltet werden.

Eine objekt- oder informationseinheitsspezifische Vergrößerung, welche von der Relevanz und/oder dem Inhalt eines Objektes wie beispielsweise eines Dialogfensters bzw. einer Informationseinheit abhängt, ist jedoch nicht möglich. Eine weitere Vergrößerung eines innerhalb des vergrößerten Bereichs liegenden Objekts z. B. eines Menüpunkts innerhalb des Dialogfensters bzw. einer Informationseinheit eines bereits vergrößerten Objektes bzw. einer bereits vergrößerten Informationseinheit ist ebenfalls nicht gezeigt. Dadurch ist es nicht möglich, die Vergrößerung bestimmten anwendungsspezifischen Kriterien anzupassen.

Der Erfindung liegt daher die Aufgabe zugrunde, ein Verfahren zur Vergrößerung von Darstellungsbereichen auf Displays zu schaffen, mit dem ein Darstellungsbereich in einer Art vergrößert werden kann, welche bestimmten anwendungsspezifischen Kriterien bzw. Zwangsbedingungen angepasst ist, um so die Bedienung insbesondere von Messgeräten zu erleichtern.

Die Aufgabe wird durch das erfindungsgemäße Verfahren mit den Merkmalen des Anspruchs 1 gelöst.

In den Unteransprüchen sind vorteilhafte Ausführungsformen des erfindungsgemäßen Verfahrens zur Vergrößerung eines Darstellungsbereichs auf einer Darstellungseinrichtung dargestellt.

Sämtliche Ausführungsbeispiele und Erläuterungen beziehen sich allgemein auf einen Darstellungsbereich. Es ist ersichtlich, dass die Möglichkeiten unabhängig von der jeweiligen Hierarchieebene der zu vergrößernden Darstellungsbereiche, d.h. unabhängig davon, ob der jeweilige Darstellungsbereich übergeordnet oder untergeordnet ist, existieren.

Ein bevorzugtes Ausführungsbeispiel des erfindungsgemäßen Verfahrens ist in der Zeichnung dargestellt und wird in der nachfolgenden Beschreibung detailliert erläutert. Es zeigen:
- Fig. 1: ein Beispiel für ein Messgerät mit einer beispielhaften Bildschirmdarstellung mit vergrößerbaren Darstellungsbereichen;
- Fig. 2: ein Flussdiagramm für mehrere Ausführungsbeispiele des erfindungsgemäßen Verfahrens;
- Fig. 3: eine erste Bildschirmdarstellung;
- Fig. 4: eine zweite Bildschirmdarstellung;
- Fig. 5: eine dritte Bildschirmdarstellung;
- Fig. 6: eine vierte Bildschirmdarstellung;
- Fig. 7: eine fünfte Bildschirmdarstellung;
- Fig. 8: eine sechste Bildschirmdarstellung;
- Fig. 9: eine siebte Bildschirmdarstellung;
- Fig. 10: eine achte Bildschirmdarstellung;
- Fig. 11: eine neunte Bildschirmdarstellung;
- Fig. 12: eine zehnte Bildschirmdarstellung;
- Fig. 13: eine elfte Bildschirmdarstellung;
- Fig. 14: eine zwölfte Bildschirmdarstellung;
- Fig. 15: eine dreizehnte Bildschirmdarstellung;
- Fig. 16: eine vierzehnte Bildschirmdarstellung;
- Fig. 17: eine fünfzehnte Bildschirmdarstellung;
- Fig. 18: eine sechzehnte Bildschirmdarstellung.

Elemente mit gleichen Bezugszeichen stellen gleiche Elemente dar. Auf wiederholte Beschreibungen in sämtlichen Figuren wird daher verzichtet.

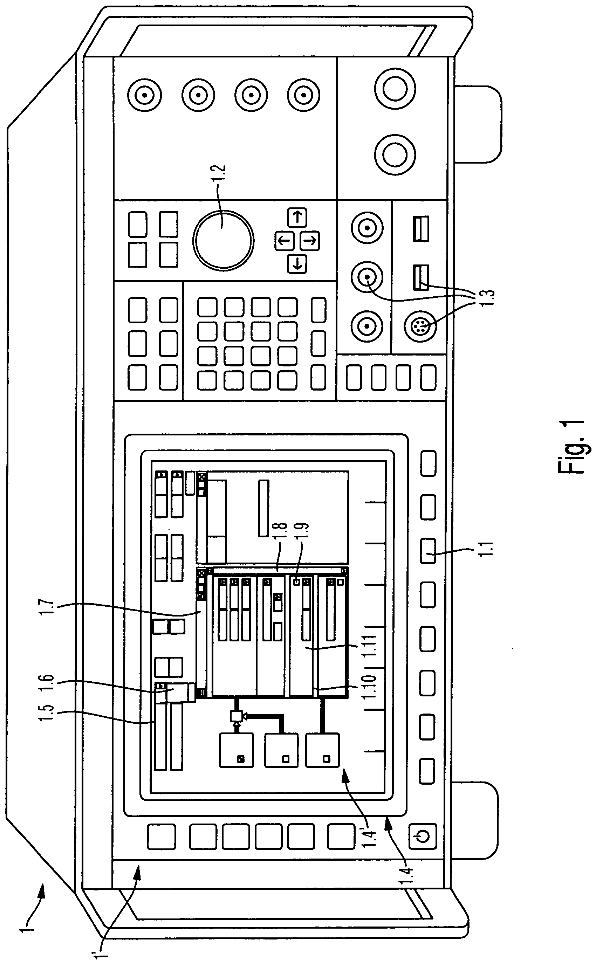

Figur 1 zeigt beispielhaft ein Messgerät 1 mit einer Frontplatte 1' mit Tasten 1.1 und einem Drehknopf 1.2 als Bedienelemente, Anschlüssen 1.3 verschiedener Art, z.B. elektrischen oder optischen Anschlüssen aus dem Stand der Technik, als Anschlüsse für Signalein- bzw. -ausgänge und einer Darstellungseinrichtung 1.4 mit einer Bildschirmdarstellung 1.4' mit mehreren Darstellungsbereichen, auf die das erfindungsgemäße Verfahren anwendbar ist. Das Frontplattenbild 1.4' umfasst im dargestellten Ausführungsbeispiel vergrößerbare Zahlenwerte 1.5, ein vergrößerbares Pull-Down-Menü 1.6, ein vergrößerbares Fensterbedienelement 1.7, eine vergrößerbare Bildlaufleiste 1.8, eine vergrößerbare Klickbox 1.9, einen vergrößerbaren Darstellungsbereich 1.10, mit zumindest einem weiter vergrößerbaren Teilbereich 1.11 als vergrößerbare Darstellungsbereiche. Die dargestellten Darstellungsbereiche stellen Bedienelemente dar. Durch eine Berührung der als Touchscreen ausgeführten Darstellungseinrichtung 1.4 können einzelne Darstellungsbereiche 1.5 - 1.11 ausgewählt und vergrößert werden. Den einzelnen Darstellungsbereichen 1.5 - 1.11 ist jeweils ein sensibler Bereich zugeordnet. Bei Berührung des Bildschirms können die jeweiligen sensiblen Bereiche ausgewählt werden. Die Vergrößerung oder die Funktion der Darstellungsbereiche kann dadurch veranlasst werden. Anstatt über eine Bildschirmberührung, können einzelne Bedienelemente in der Bildschirmdarstellung 1.4' auch über die Bedienung der Tasten 1.1 und/oder des Drehknopfs 1.2 auf der Frontplatte 1.4 bedient werden. Dazu werden einzelne Darstellungsbereiche und physische Bedienelemente variabler Funktion, z.B. 1.1, 1.2, miteinander assoziiert. Vorzugsweise führt eine Bedienung über Tasten zu keiner Vergrößerung, während eine Bedienung über den Bildschirm zu einer Vergrößerung führt. Eine Bedienung kann auch über externe Geräte wie z.B. Tastatur und Maus erfolgen. Es können Cursor-Tasten, Drehknöpfe, Softkeys, Hardkeys usw. verwendet werden.

Das erfindungsgemäße Verfahren zur Vergrößerung von Darstellungsbereichen auf Darstellungseinrichtungen 1.4, nachfolgend verkürzt als Displays bezeichnet, bezieht sich auf vergrößerbare Darstellungsbereiche. Ein vergrößerbarer Darstellungsbereich ist durch eine vorzugsweise visuell dargestellte Grenze zu der restlichen Anzeige des Displays abgegrenzt. Als Grenze eignen sich z.B. Rahmen, Farbwechsel oder ähnliches. Innerhalb solcher Grenzen sind jeweils zusammengehörige Inhalte und/oder virtuelle Bedienelemente dargestellt. Eine solche konkret sichtbar ausgeführte Grenze kann auch entfallen. Dies ist z. B. dann vorteilhaft, wenn durch eine logische Gliederung eine visuelle Abgrenzung überflüssig ist. Auch Teilbereiche von vergrößerbaren und/oder bereits vergrößerten Darstellungsbereichen können ihrerseits vergrößerbar sein und daher als vergrößerbare Darstellungsbereiche definiert werden. Bereits vergrößerte Darstellungsbereiche können ihrerseits weiter vergrößerbar sein. Es kann auch eine Gruppe vergrößerbarer Darstellungsbereiche bzw. Teilbereiche als eigenständig vergrößerbarer Darstellungsbereich definiert und als solcher vergrößert werden. Ein vergrößerbarer Darstellungsbereich kann einen fixen oder insbesondere im Falle von virtuellen Bedienelementen einen veränderbaren Inhalt darstellen. Ein Inhalt kann z.B. ein virtuelles Bedienelement und/oder eine Informationseinheit sein. Ein virtuelles Bedienelement kann z.B. ein Button, eine Clickbox oder ein Eingabefeld sein. Ein Touchscreensignal wird aufgrund einer Berührung eines berührungsempfindlichen Displays räumlich aufgelöst ermittelt und in bekannter Weise (z.B. mittels eines sensitiven Bereichs) einem vergrößerbaren Darstellungsbereich zugeordnet, welcher somit als zu vergrößernder vergrößerbarer Darstellungsbereich bestimmt wird. Der zu vergrößernde vergrößerbare Darstellungsbereich wird darstellungsbereichspezifisch vergrößert, d.h. die für ihn durchzuführende Art der Vergrößerung, z.B. hinsichtlich seiner Vergrößerungsfaktoren in x- und y-Richtung und die Position der vergrößerten Darstellung, ist individuell für diesen bestimmten zu vergrößernden vergrößerbaren Darstellungsbereich festgelegt.

Die Art der darstellungsbereichspezifischen Vergrößerung, d.h. die darstellungsbereichspezifische Abbildungs- bzw. Vergrößerungsfunktion, ist vorzugsweise durch mehrere unabhängige Parameter festgelegt. Z.B. kann die Art der Vergrößerung in Abhängigkeit von der Größe und/oder Form und/oder Orientierung und/oder Lage und/oder dem Inhalt des zu vergrößernden vergrößerbaren Darstellungsbereichs festgelegt werden. Die Größe und/oder Form und/oder Orientierung und/oder Lage und/oder der Inhalt des vergrößerten Darstellungsbereichs können somit in Abhängigkeit von der Größe und/oder Form und/oder Orientierung und/oder Lage und/oder dem Inhalt des zu vergrößernden vergrößerbaren Darstellungsbereichs festgelegt werden. Dadurch ist eine adäquate, d. h. der vorzunehmenden Bedienung angepasste Vergrößerung möglich, welche aufgrund der Formgebung und/oder Positionierung und/oder Orientierung des vergrößerten Darstellungsbereichs eine besonders gute Lesbarkeit und/oder Bedienbarkeit des vergrößerten Darstellungsbereichs und der darin enthaltenen Inhalte gewährleistet. Die Vergrößerung ist zudem auch so wählbar, dass wichtige, nicht vergrößerte Inhalte nicht überdeckt werden. Die Vergrößerung ist in so einem Fall ein Kompromiss. Sowohl ein vergrößerter Darstellungsbereich als auch ein Teil von einem solchen können jeweils als vergrößerbare Darstellungsbereiche definiert werden. Auf diese Weise kann auch ein bereits vergrößerter Darstellungsbereich als vergrößerbarer Darstellungsbereich weiter darstellungsbereichspezifisch vergrößert werden, wobei für die weitere Vergrößerung die Art der Vergrößerung ebenfalls individuell festlegbar ist. Zur Festlegung der Art der Vergrößerung kann z. B. in einer Tabelle für jeden als vergrößerbar definierten Darstellungsbereich ein Parametersatz festgelegt werden, der zumindest Position und Vergrößerungsfaktor in x- und y-Richtung enthält.

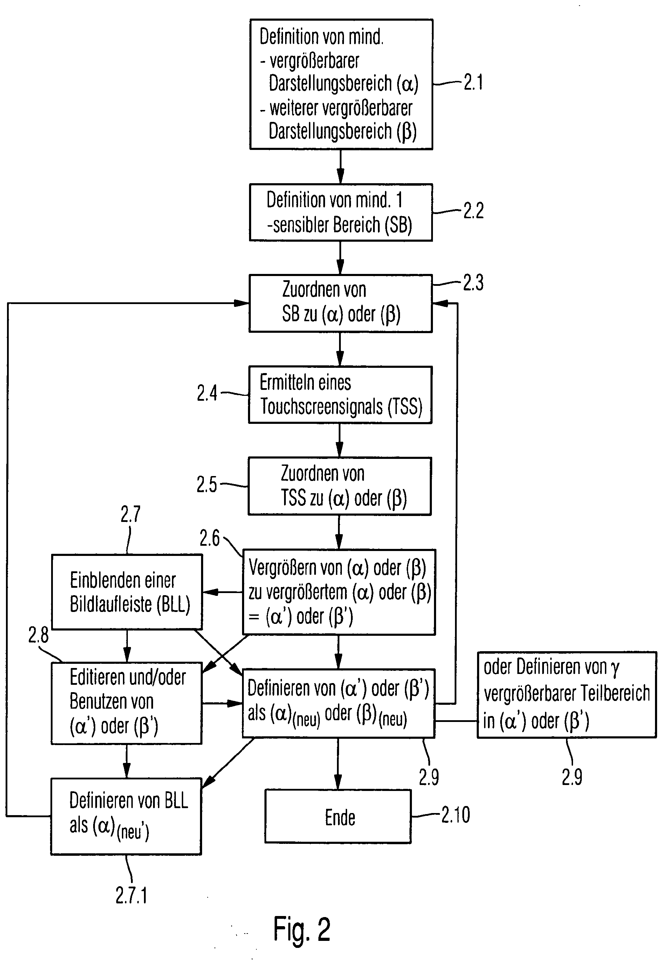

Ein Ausführungsbeispiel zum Ablauf des erfindungsgemäßen Verfahrens ist in Fig. 2 dargestellt. Dabei ist zu beachten, dass nicht immer alle Verfahrensschritte durchgeführt werden müssen. In einem ersten Verfahrensschritt 2.1 werden mindestens zwei unterschiedliche vergrößerbare Darstellungsbereiche definiert (α, β). Dabei kann ein vergrößerbarer Darstellungsbereich (α) auch als vergrößerbarer Teilbereich eines weiteren vergrößerbaren Darstellungsbereichs (β) definiert sein, also innerhalb des zweiten vergrößerbaren Darstellungsbereichs (β) liegen. In einem zweiten Verfahrensschritt 2.2 wird mindestens ein sensibler Bereich (SB) definiert. Die Größe und/oder Form und/oder Orientierung und/oder Lage des sensiblen Bereichs (SB) wird dem vergrößerbaren Darstellungsbereich (α, β) angepasst, dem der sensible Bereich (SB) in einem dritten Verfahrensschritt 2.3 zugeordnet wird.

Bei der Berührung des Touchscreens und der Auswertung einer solchen Berührung kann ein versehentliches Auslösen einer Funktion, der ein aktiver Bereich zugeordnet ist, in nicht vergrößertem Zustand des Darstellungsbereichs verhindert werden. Dazu ist es möglich, die ausführbaren Funktionen, z.B. von Klickboxen oder Schaltflächen, zu blockieren, solange der Darstellungsbereich nicht vergrößert ist. Dies kann auch selektiv nur bei Touchscreenbedienung erfolgen, so dass eine Bedienung z.B. mit einer Zeigeeinrichtung (Maus) auch ohne Vergrößerung erfolgen kann.

Die Grenzen des sensiblen Bereichs und des vergrößerbaren Darstellungsbereichs können räumlich auch auseinanderfallen. Dies ist insbesondere dann vorteilhaft, wenn der zu vergrößernde Darstellungsbereich vergleichsweise klein ist. Durch eine Abweichung des sensiblen Bereichs hinsichtlich seiner Geometrie von dem vergrößerbaren Darstellungsbereich ist es so möglich, das "Treffen" mit einer Berührung auf dem Touchscreen zu vereinfachen. So sind Randberührungen oder Berührungen knapp außerhalb des eigentlich zu vergrößernden Darstellungsbereichs einfacher zuzuordnen und Fehlbedienungen werden vermieden.

In einem vierten Verfahrensschritt 2.4 wird ein Touchscreensignal (TSS) nach einer Berührung des Displays ermittelt. Das Touchscreensignal (TSS) wird in einem fünften Verfahrensschritt 2.5 dem sensiblen Bereich (SB), welcher dem vergrößerbaren Darstellungsbereich (α, β) zugeordnet ist, und somit dem vergrößerbaren Darstellungsbereich (α, β) selbst zugeordnet. Der vergrößerbare Darstellungsbereich (α, β), welcher ab dem fünften Verfahrensschritt 2.5 als zu vergrößernder vergrößerbarer Darstellungsbereich (α, β) bestimmt ist, wird in einem sechsten Verfahrensschritt 2.6 darstellungsbereichspezifisch vergrößert (α', β'). Dazu werden in Abhängigkeit von dem identifizierten Darstellungsbereich (α, β) die Parameter zu dessen Vergrößerung z.B. aus einer Tabelle ermittelt. In einem siebten Verfahrensschritt wird, sofern erforderlich, eine Bildlaufleiste (BLL) als Bedienelement eingeblendet, mit der eine Darstellung des vergrößerten Darstellungsbereichs (α', ß') gescrollt werden kann. Das Einblenden kann automatisch erfolgen, wenn aufgrund der Parameter der Vergrößerung der vergrößerte Darstellungsbereich (α', β') nicht mehr vollständig auf dem Display darstellbar ist und/oder Bereiche überdecken würde, welche besonders wichtig sind und daher zur Anzeige des vergrößerten Bereichs nicht zur Verfügung stehen. Solche Bereiche können optisch als solche gekennzeichnet sein. Insbesondere ist es so auch möglich, innerhalb eines dargestellten Fensters, das seinerseits nicht vergrößert werden kann, ohne andere Elemente zu verdecken, einen dort dargestellten Inhalt zu vergrößern. Die Beibehaltung der Fenstergrenzen macht es dann erforderlich, die Scrollbars oder Bildlaufleisten automatisch einzuführen, um beispielsweise in einem größeren Textblock navigieren zu können. In einem optionalen achten Verfahrensschritt 2.8 wird der vergrößerte Darstellungsbereich (α', β') z.B. durch Editieren des Inhalts verändert und/oder durch Betätigen einer Funktion, z.B. durch einen Benutzer, benutzt. Falls erforderlich, wird der vergrößerte Darstellungsbereich (α', β') in einem neunten Verfahrensschritt 2.9 selbst noch einmal als vergrößerbarer Darstellungsbereich (α, β) definiert. Dem vergrößerbaren Darstellungsbereich (α, β) kann wieder, entsprechend dem dritten Verfahrensschritt 2.3, ein sensibler Bereich (SB) zugeordnet werden. Die auf den dritten Verfahrensschritt 2.3 folgenden Verfahrensschritte 2.4 bis 2.9 können erneut angewendet werden. Analog kann auch mit einem aus diesem Prozess hervorgehenden vergrößerten Darstellungsbereich (α') vorgegangen werden. Zudem können in den vergrößerten Darstellungsbereichen α', β' neue vergrößerbare Teilbereiche als Darstellungsbereiche γ definiert werden.

In alternativen Ausführungsbeispielen des erfindungsgemäßen Verfahrens wird auf die Verfahrensschritte 2.7, 2.8, 2.9 und/oder 2.7.1 verzichtet. Es ist weder zwingend erforderlich einen Teilbereich zu definieren bzw. allein zu vergrößern, noch zwingend eine Bildlaufleiste (BLL) einzublenden, noch zwingend einen Darstellungsbereich bzw. Teilbereich zu verändern (α, β) und/oder zu benutzen, noch zwingend einen bereits vergrößerten Darstellungsbereich bzw. Teilbereich (α', β') weiter zu vergrößern. Es können alle durch die in der Figur 2 dargestellten Pfeile dargestellten Schrittfolgen ausgeführt werden.

Die Bildlaufleiste kann in einem Hilfsverfahrensschritt 2.7.1 als vergrößerbarer Darstellungsbereich definiert werden. Diesem vergrößerbaren Darstellungsbereich bzw. Teilbereich kann seinerseits entsprechend dem dritten Verfahrensschritt 2.3, ein sensibler Bereich zugeordnet werden. Die auf den dritten Verfahrensschritt 2.3 folgenden Verfahrensschritte 2.4 bis 2.9 können auch in diesem Fall angewendet werden. Analog kann auch mit einem aus diesem Prozess hervorgehenden vergrößerbaren Darstellungsbereich bzw. Teilbereich vorgegangen werden, usw. Auch in diesem Fall kann auf die Verfahrensschritte 2.7 und/oder 2.8 verzichtet werden. Wichtig ist, dass es eine oder mehrere Ebenen für das vorliegende Verfahren geben kann. Innerhalb eines, auch bereits in mehreren Stufen vergrößerten Darstellungsbereichs oder Teilbereichs können jeweils wieder dieselben Funktionen vorhanden sein, wie für einen Darstellungsbereich des ursprünglichen Displays.

Bei einer Vergrößerung eines vergrößerbaren Darstellungsbereichs oder eines vergrößerbaren Teilbereichs, bei der nicht der gesamte Darstellungsbereich gleichzeitig, d.h. in seiner Gesamtheit, vergrößert dargestellt wird, kann eine Bildlaufleiste (BLL) automatisch auf dem Display eingeblendet werden. Die Bildlaufleiste (BLL) kann selbst vergrößerbar, also als vergrößerbarer Darstellungsbereich, definiert sein. Dadurch können die vergrößert dargestellten Bereiche des zu vergrößernden Darstellungs(teil)bereichs einfach gescrollt werden. Der gesamte Inhalt des vergrößerbaren und/oder vergrößerten Darstellungsbereichs bzw. Teilbereichs ist, wenn auch erst durch Scrollen, dadurch darstellbar. Auf diese Weise können Teile von Darstellungsbereichen in Abhängigkeit vom Scrollzustand stark vergrößert werden, ohne zuviel Platz auf dem Display zu beanspruchen. Es sind somit Darstellungen von Bereichen stark vergrößerter Darstellungsbereiche und/oder Teilbereiche möglich, welche ohne Scrollmechanismus über die Displayfläche hinausgehen würden. Die Bildlaufleiste ist dabei vorzugsweise selbst ein vergrößerbarer Teilbereich, der zu seiner Bedienung vergrößert dargestellt wird.

Als vergrößerbare Darstellungsbereiche können z.B. auch folgende virtuelle Bedienelemente definiert werden: einzelne Fenster oder eine Gruppe von Fenstern, einzelne Fenster-Bedienelemente oder eine Gruppe von Fenster-Bedienelementen, Bildlaufleisten, einzelne Dialogbereiche oder Gruppen von Dialogbereichen, Pull-Down-Menüs, Pop-Up-Menüs, Menüs mit Baumstruktur, Tabellen mit einzelnen oder Gruppen von vergrößerbaren Tabellenelementen, Blockschaltbildgrafiken, einzelne Zahlenwerte oder Gruppen von Zahlenwerten, einzelne Klickboxen oder Gruppen von Klickboxen und einzelne vergrößerbare Verweise in Texten ("Links") oder Gruppen von Links. Als vergrößerbare Darstellungsbereiche können auch vergrößerbare Menüs mit vergrößerbarer Baumstruktur verwendet werden. Die Baumstruktur kann ein Bedienelement und/oder Information in Form von Text umfassen, welche jeweils zusätzlich mit "+" bzw. "-" gekennzeichnet sein können. Die Vergrößerung der Höhe und Breite kann jeweils unterschiedlich stark erfolgen. Es können z.B. auch der Zeilenabstand zwischen Textelementen bzw. Bedienelementen und/oder die Schriftgröße von Textelementen vergrößert bzw. angepasst werden. Es können aber auch Informationseinheiten, welche keine Bedienelemente sind, als vergrößerbare Darstellungsbereiche bzw. Teilbereiche definiert werden.

Einem Bedienelement, ob nun als vergrößerbarer und/oder vergrößerter Darstellungsbereich kann ein sensitiver Bereich zur Vergrößerung und/oder ein aktiver Bereich zur Betätigung seiner Funktion zugeordnet werden. Der sensitive Bereich und der aktive Bereich können jeweils so ausgebildet sein, dass insbesondere durch einen Benutzer klar unterschieden werden kann, welche Funktion durch Berühren des Bildschirms ausgelöst wird. Einem vergrößerten Bedienelement kann sowohl ein vergrößerter aktiver Bereich als auch ein vergrößerter sensitiver Bereich zugeordnet werden.

Nach Ablauf einer bestimmten Zeit oder nach einer dafür vorgesehenen Berührung des Touchscreens wird die Vergrößerung rückgängig gemacht (Schritt 2.10). Das Zeitintervall nach dessen Ablauf die Vergrößerung aufgehoben wird, beginnt dabei bei jeder neuen Aktion, die innerhalb des vergrößerten Darstellungsbereichs ausgeführt wird, neu. Damit wird eine Rücknahme der Vergrößerung während der Bedienung verhindert. Als Berührung zum Rückgängigmachen einer Vergrößerung kann z.B. eine Berührung eines Bereichs verwendet werden, dem kein sensitiver Bereich oder ein sensitiver Bereich eines anderen vergrößerbaren Darstellungsbereichs zugeordnet ist.

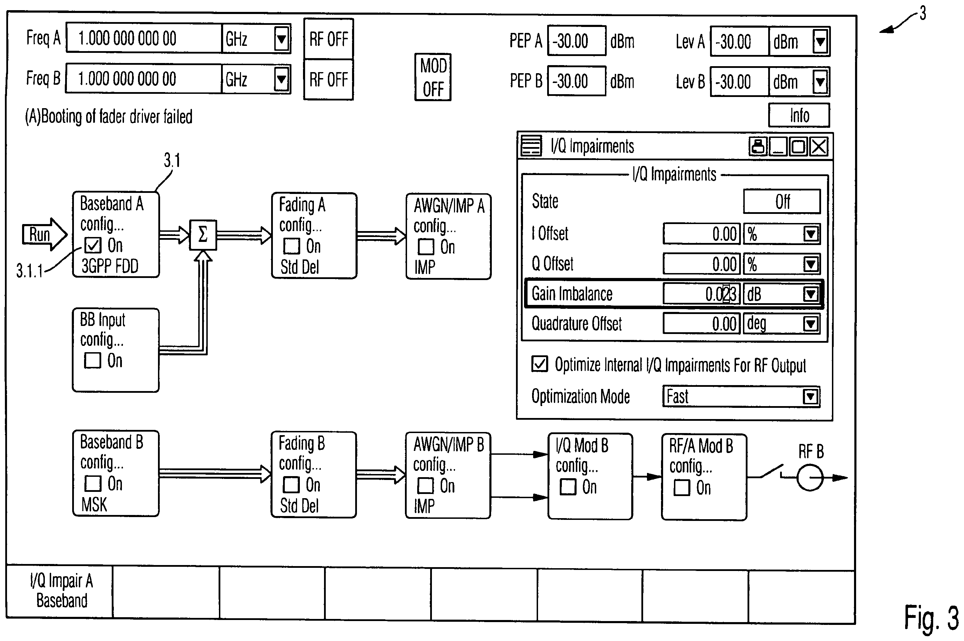

Fig. 3 zeigt eine erste Bildschirmdarstellung 3. In der ersten Bildschirmdarstellung 3 sind verschiedene vergrößerbare Darstellungsbereiche gezeigt. Insbesondere ist ein vergrößerbares erstes Bedienelement 3.1 gezeigt. Das vergrößerbare erste Bedienelement 3.1 umfasst eine Klickbox 3.1.1. Dem vergrößerbaren ersten Bedienelement 3.1 ist ein sensitiver Bereich (nicht dargestellt) zugeordnet. Durch Berühren des sensitiven Bereichs des vergrößerbaren ersten Bedienelements 3.1 mittels Touchscreen wird eine Vergrößerung des vergrößerbaren ersten Bedienelements 3.1 veranlasst. Der Klickbox 3.1.1 ist in dem vergrößerbaren ersten Bedienelement 3.1 ein aktiver Bereich (nicht dargestellt) zugeordnet. Durch Berühren des aktiven Bereichs der vergrößerbaren Klickbox 3.1.1 in der noch nicht vergrößerten Darstellung mittels Touchscreen wird eine Funktionsausübung der Klickbox 3.1.1 veranlasst. Alternativ kann der Klickbox 3.1.1 kein aktiver Bereich zugeordnet werden, über den eine Funktionsausübung veranlasst werden kann. Eine unabsichtliche Betätigung der Klickbox 3.1.1 in nicht vergrößertem Zustand kann dadurch vermieden werden.

Je nach Abstand zwischen aktiven Bereichen sind unterschiedliche Verfahren möglich. Wenn der Abstand zwischen den aktiven Bereichen groß genug ist, um eine sichere Auswahl der aktiven Bereiche mit Touchscreen zu ermöglichen, dann wird der aktive Bereich z.B. einer Klickbox 3.1.1 oder einer anderen Schaltfläche in dem ein Touchscreensignal wirksam als eine Berührung erkannt und der entsprechenden Klickbox 3.1.1 bzw. anderen Schaltfläche zugeordnet wird, über die sichtbare Größe der entsprechenden Klickbox 3.1.1 bzw. anderen Schaltfläche hinaus vergrößert. Eine sichtbare Vergrößerung der entsprechenden Klickbox 3.1.1 ist in diesem Fall nicht erforderlich. Wenn der Abstand zwischen den aktiven Bereichen jedoch zu klein ist, dann wird zusätzlich z.B. das gesamte Fenster 3.1 und/oder die andere Schaltfläche samt der entsprechenden aktiven Bereiche, wie z.B. Klickbox 3.1.1 und/oder weitere aktive Bereiche, vergrößert, um damit den Abstand zwischen der z.B. Klickbox 3.1.1 und der Schaltfläche "config..." zu vergrößern und so eine gegenseitige Überdeckung beim Vergrößern zu vermeiden. Die Unterscheidung zwischen den beiden Fällen kann entweder zum Zeitpunkt der Entwicklung des Programmcodes für die Bedienoberfläche des Messgeräts oder automatisch zur Ausführungszeit des Codes durch ein geeignetes Programmstück, das den Abstand der aktiven Bereiche misst, erfolgen. In diesem Fall würde eine Anpassung des nicht vergrößerten Darstellungsbereichs 3.1 auf z.B. unterschiedliche Bildschirmgrößen automatisch berücksichtigt. Bei großen Abständen zwischen aktiven Bereichen von Darstellungsbereichen können die aktiven Bereiche also vergrößert werden bzw. bereits große aktive Bereiche verwendet werden.

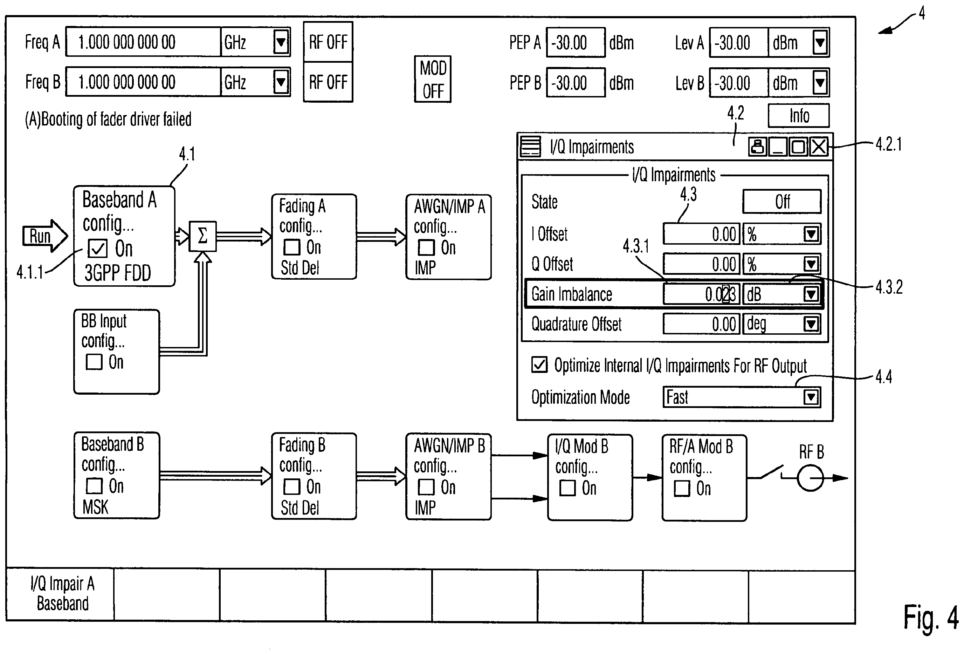

Fig. 4 zeigt eine zweite Bildschirmdarstellung 4. In der zweiten Bildschirmdarstellung 4 sind verschiedene vergrößerbare Darstellungsbereiche und ein vergrößertes erstes Bedienelement 4.1 gezeigt. Das vergrößerte erste Bedienelement 4.1 entsteht nach einer Berührung des ersten Bedienelements 3.1 der Fig. 3 und umfasst eine vergrößerte Klickbox 4.1.1. Dem vergrößerten ersten Bedienelement 4.1 ist ein aktiver Bereich (nicht dargestellt) zugeordnet. Der vergrößerten Klickbox 4.1.1 ist in dem vergrößerten ersten Bedienelement 4.1 ebenfalls ein aktiver Bereich (nicht dargestellt) zugeordnet. Durch Berühren des aktiven Bereichs der vergrößerten Klickbox 4.1.1 mittels Touchscreen wird eine Funktionsausübung der Klickbox 4.1.1 veranlasst. Die gezielte Bedienung der beiden Funktionen "config..." und "on" wird dadurch erleichtert.

In der zweiten Bildschirmdarstellung 4 ist zudem ein vergrößerbares erstes Fenster 4.2 gezeigt. Das vergrößerbare erste Fenster 4.2 umfasst ein vergrößerbares erstes Fensterbedienelement 4.2.1. Dem vergrößerbaren ersten Fenster 4.2 ist ein sensitiver Bereich (nicht dargestellt) zugeordnet. Durch Berühren des sensitiven Bereichs des vergrößerbaren ersten Fensters 4.2 mittels Touchscreen wird eine Vergrößerung des vergrößerbaren ersten Fensters 4.2 veranlasst. Dem vergrößerbaren ersten Fensterbedienelement 4.2.1 ist in dem vergrößerbaren ersten Fenster 4.2 ein eigener sensitiver Bereich (nicht dargestellt) zugeordnet. Durch Berühren des eigenen sensitiven Bereichs des vergrößerbaren ersten Fensterbedienelements 4.2.1 mittels Touchscreen wird eine Vergrößerung des vergrößerbaren ersten Fensterbedienelements 4.2.1 veranlasst. Dem unvergrößerten, vergrößerbaren ersten Fensterbedienelement 4.2.1 ist kein aktiver Bereich zugeordnet, über den eine Funktionsausübung veranlasst werden kann. Eine unabsichtliche Betätigung des vergrößerbaren ersten Fensterbedienelements 4.2.1 ist dadurch unmöglich.

In der zweiten Bildschirmdarstellung 4 ist zudem ein vergrößerbarer erster Fensterinhalt 4.3 gezeigt. Der vergrößerbare erste Fensterinhalt 4.3 umfasst ein vergrößerbares erstes Zahlenfeld 4.3.1, eine vergrößerbare erste Combo-Box 4.3.2, auch Pull-Down-Menü genannt, zum Einstellen von Maßeinheiten und eine zweite vergrößerbare Combo-Box 4.4. Dem vergrößerbaren ersten Fensterinhalt 4.3, dem vergrößerbaren ersten Zahlenfeld 4.3.1, der vergrößerbaren ersten Combo-Box 4.3.2 und der zweiten vergrößerbaren Combo-Box 4.4 sind jeweils ein eigener sensitiver Bereich (nicht dargestellt) zugeordnet.

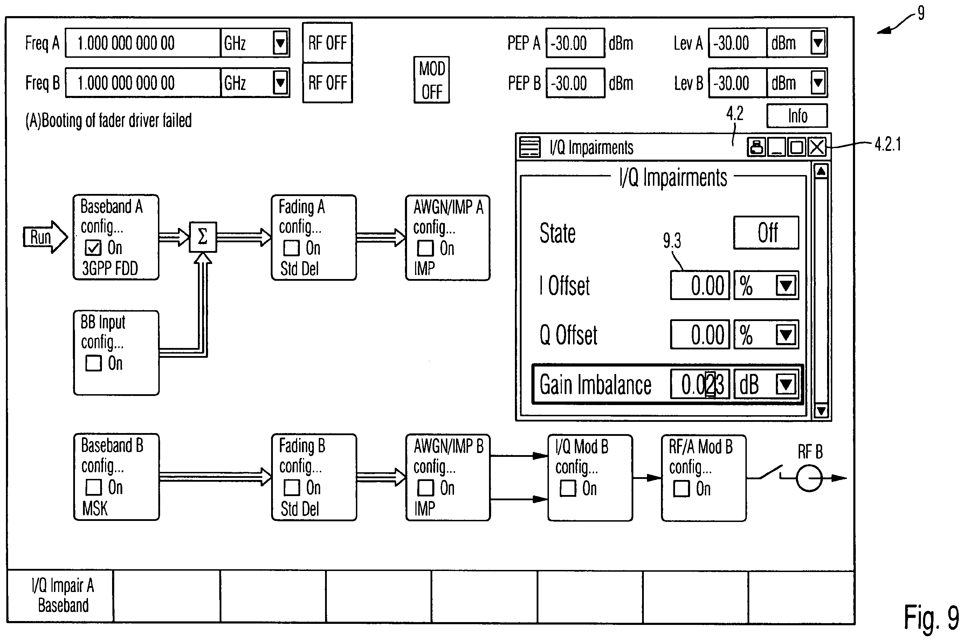

Durch Berühren des sensitiven Bereichs des vergrößerbaren ersten Fensterinhalts 4.3 mittels Touchscreen wird eine Vergrößerung des vergrößerbaren ersten Fensterinhalts 4.3 veranlasst (siehe Fig. 9).

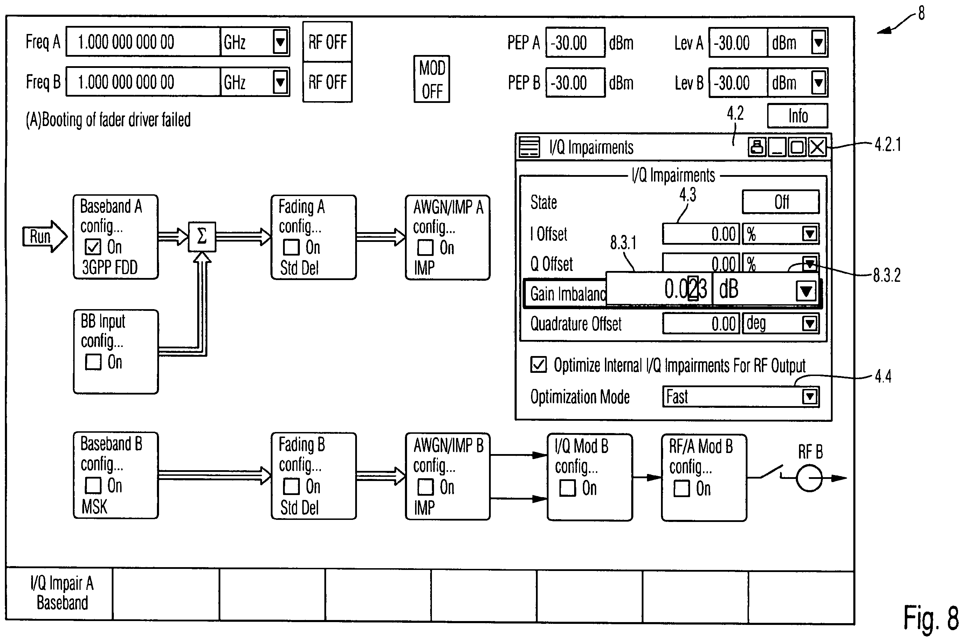

Durch Berühren des sensitiven Bereichs des vergrößerbaren ersten Zahlenfelds 4.3.1 mittels Touchscreen wird eine Vergrößerung des vergrößerbaren ersten Zahlenfelds 4.3.1 veranlasst (siehe Fig. 8).

Durch Berühren des sensitiven Bereichs der vergrößerbaren ersten Combo-Box 4.3.2 mittels Touchscreen wird eine Vergrößerung der vergrößerbaren ersten Combo-Box 4.3.2 veranlasst (siehe Fig. 8).

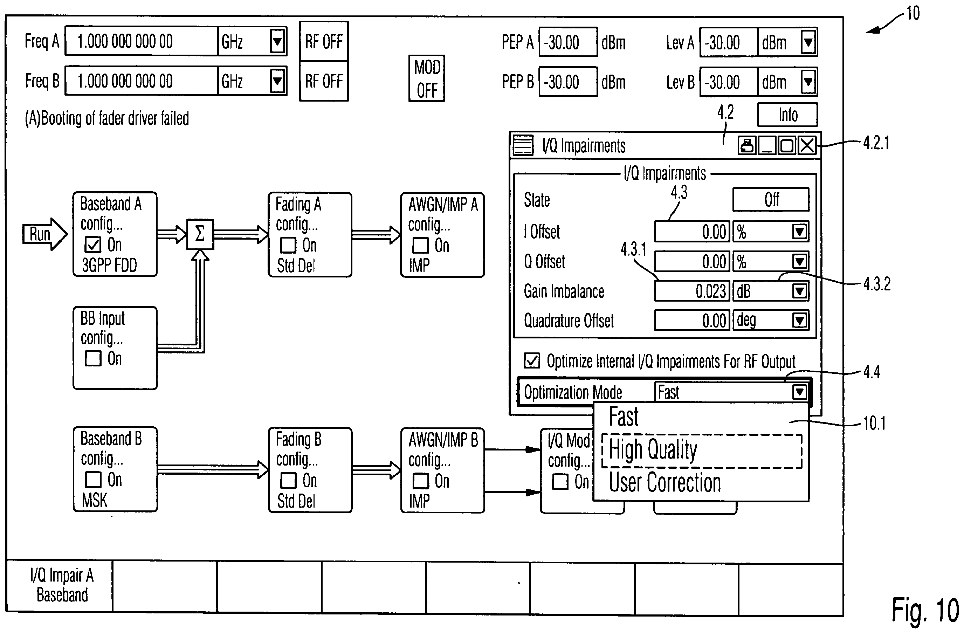

Durch Bedienen der zweiten vergrößerbaren Combo-Box 4.4 mittels Touchscreen wird ein Auftauchen eines vergrößerten ersten Pull-Down-Menüs 10.1 (siehe Fig. 10) veranlasst. In diesem Fall wird eine unmittelbar vergrößerte Darstellung bei Bedienung erzielt.

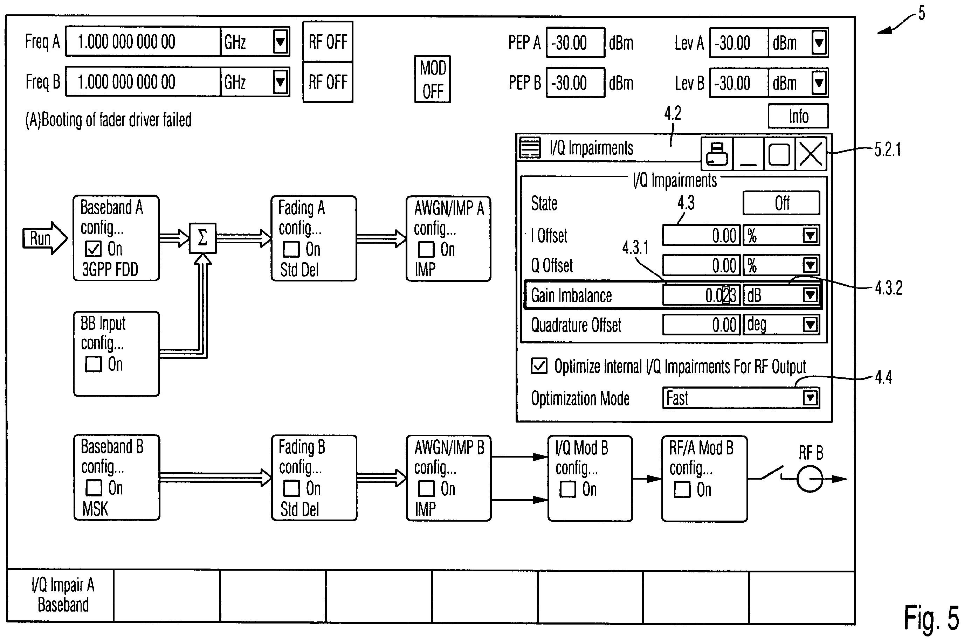

Fig. 5 zeigt eine dritte Bildschirmdarstellung 5. In der dritten Bildschirmdarstellung 5 ist das vergrößerte erste Fensterbedienelement 5.2.1 der Fig. 4 (entstanden aus 4.2.1) gezeigt. Dem vergrößerten ersten Fensterbedienelement 5.2.1 sind verschiedene aktive Bereiche (nicht dargestellt) zugeordnet. Durch Berühren eines aktiven Bereichs des vergrößerten ersten Fensterbedienelements 5.2.1 mittels Touchscreen wird eine für den entsprechenden aktiven Bereich spezifische Funktionsausübung veranlasst.

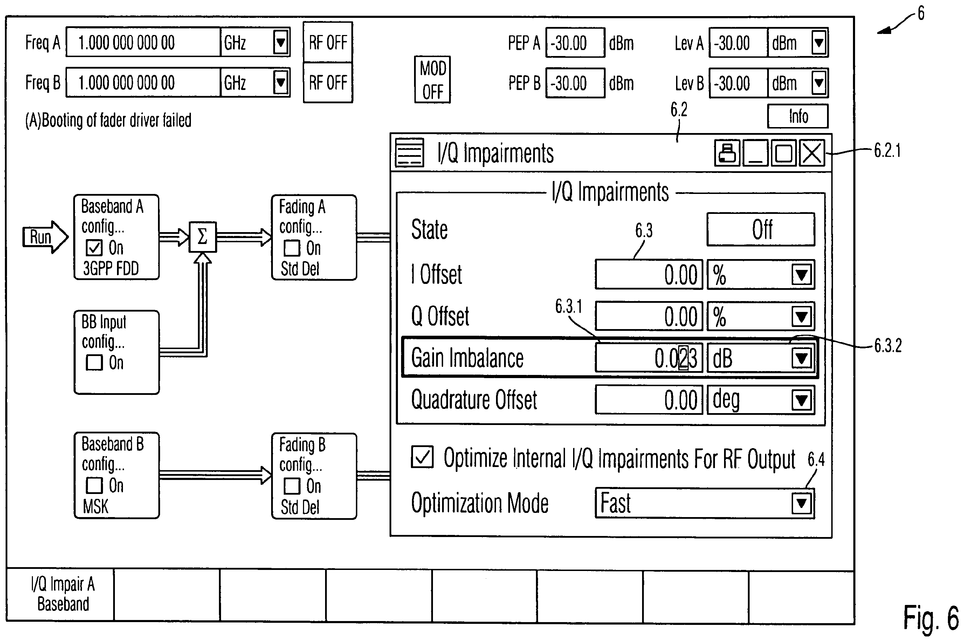

Fig. 6 zeigt eine vierte Bildschirmdarstellung 6. In der vierten Bildschirmdarstellung 6 ist ein insgesamt vergrößertes erstes Fenster 6.2 gezeigt. Das vergrößerte erste Fenster 6.2 aus der Fig. 4 (entstanden aus 4.2) umfasst ein vergrößertes und weiter vergrößerbares erstes Fensterbedienelement 6.2.1 (entstanden aus 4.2.1) und einen vergrößerten und weiter vergrößerbaren ersten Fensterinhalt 6.3 (entstanden aus 4.3). Der vergrößerte und weiter vergrößerbare erste Fensterinhalt 6.3 umfasst ein vergrößertes und weiter vergrößerbares erstes Zahlenfeld 6.3.1 (entstanden aus 4.3.1), eine vergrößerte und weiter vergrößerbare erste Combo-Box 6.3.2 (entstanden aus 4.3.2) und eine zweite vergrößerte und weiter vergrößerbare Combo-Box 6.4 (entstanden aus 4.4).

Es wurde hier der gesamte Dialog samt seiner Elemente 6.3.1, 6.3.2 und der Fläche, die der Dialog benötigt, vergrößert. Es können jedoch auch lediglich ein einzelnes Element 6.3.1, 6.3.2 oder eine Gruppe von Elementen wie z.B. in Fig. 8 gezeigt im Dialog vergrößert werden. In diesem Fall werden u.U. weniger Dialogelemente (meist Zeilen) dargestellt und es muss evtl. gescrollt werden. Dazu kann eine Bildlaufleiste verwendet werden, welche zusätzlich zum vergrößerten Darstellungsbereich dargestellt bzw. geeignet eingeblendet wird. Damit der Bediener sofort den gewünschten Bereich des Dialogs sieht, wird der Bereich des Dialogs, den er mit dem Finger berührt hat (als der Dialog noch nicht vergrößert war), nach der Vergrößerung wieder an der Position z.B. seines Fingers angezeigt. Dadurch erscheint der gesamte Dialog für den Benutzer um die z.B. mit dem Finger markierte Position herum vergrößert. In beiden obigen Fällen kann die Vergrößerung in Höhe und Breite unabhängig voneinander unterschiedlich erfolgen. Z.B. kann lediglich nur der Zeilenabstand vergrößert werden ohne die Dialogbreite zu ändern. Die Parameter (hier: Vergrößerungsfaktor in x- und y-Richtung) werden vorab für den speziellen Dialog festgelegt.

Dem vergrößerten und weiter vergrößerbaren ersten Fensterbedienelement 6.2.1, dem vergrößerten und weiter vergrößerbaren ersten Fensterinhalt 6.3, dem vergrößerten und weiter vergrößerbaren ersten Zahlenfeld 6.3.1, der vergrößerten und weiter vergrößerbaren ersten Combo-Box 6.3.2 und der vergrößerten und weiter vergrößerbaren zweiten Combo-Box 6.4 sind jeweils ein eigener sensitiven Bereich (nicht dargestellt) zugeordnet.

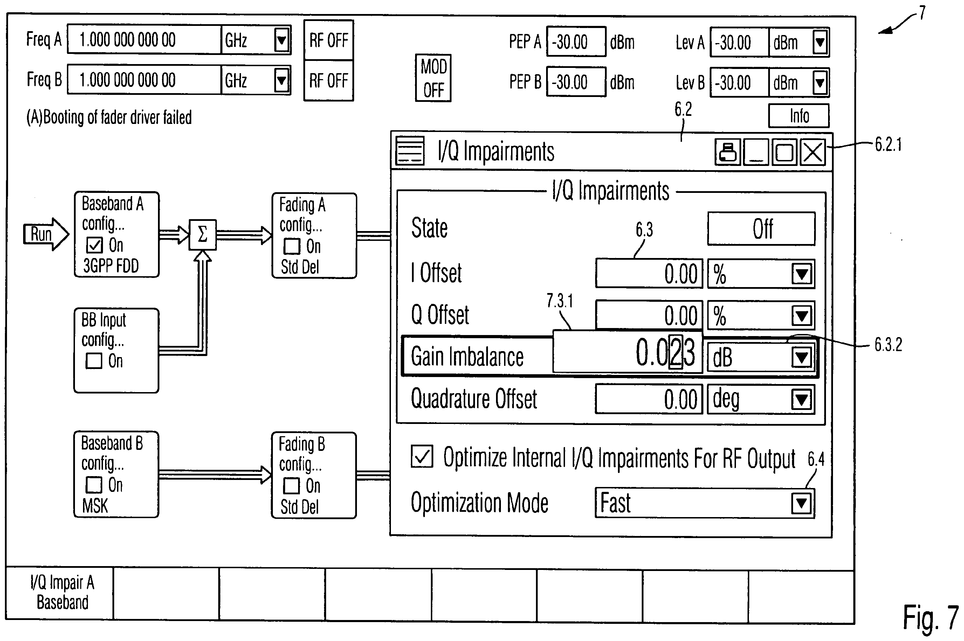

Durch Berühren des sensitiven Bereichs des vergrößerten und weiter vergrößerbaren ersten Zahlenfelds 6.3.1 mittels Touchscreen wird eine weitere Vergrößerung des vergrößerten und weiter vergrößerbaren ersten Zahlenfelds 6.3.1 veranlasst, wie es in Fig. 7 mit Bezug auf das weiter vergrößerte erste Zahlenfeld 7.3.1 gezeigt ist.

Auf eine weitere Vergrößerung kann verzichtet werden, wenn durch den ersten Vergrößerungsschritt bereits eine zur Bedienung ausreichend große Darstellung erreicht ist.

Fig. 8 zeigt eine sechste Bildschirmdarstellung mit einem vergrößerten ersten Zahlenfeld 8.3.1 (entstanden aus 4.3.1) und einer vergrößerten ersten Combo-Box 8.3.2 (entstanden aus 4.3.2). Es wird im gezeigten Beispiel das gesamte Eingabefeld bestehend aus dem ersten Zahlenfeld 8.3.1 und der ersten Combo-Box 8.3.2 vergrößert. Dies erfolgt durch Definieren eines solchen Eingabefelds, das den gesamten Zahlenwert einschließlich des auswählbaren Einheitenfelds beinhaltet, als vergrößerbarer Darstellungsbereich oder weiter vergrößerbarer Teilbereich. Dadurch wird die Auswahl einer bestimmten Ziffer über Touchscreen erleichtert. Es kann ein Blockcursor verwendet werden, um in dem vergrößert dargestellten Bereich eine Ziffernstelle zu markieren, die z.B. mit Hilfe des Drehknopfs variiert werden kann. Wenn in dem jeweiligen Bedienkonzept Zahlenwerte in unterschiedlicher Größe (je nach Wichtigkeit) dargestellt werden, dann kann die Vergrößerungsfunktion auch auf die kleinere Zahlendarstellung eingeschränkt werden. Wenn Zahlenwerte innerhalb eines Dialogs dargestellt werden, kann die Vergrößerung den Dialog oder nur den Zahlenwert oder beide betreffen. D.h., beim Berühren des Zahlenwerts in dem Eingabefeld (hier: das erste Zahlenfeld 8.3.1) wird allein dieses vergrößert. Beim Berühren des Dialogs wird dieser samt des Zahlenwerts im Eingabefeld vergrößert. Wenn nach Berühren des Dialogs innerhalb des vergrößerten Dialogs der Zahlenwert bzw. das Eingabefeld berührt wird, kann dieses noch einmal vergrößert werden.

Fig. 9 zeigt als Alternative zu Fig. 6 eine siebte Bildschirmdarstellung 9 mit einem vergrößerten ersten Fensterinhalt 9.3 (entstanden aus 4.3) in dem hier nicht vergrößerten ersten Fenster 4.2. Der vergrößerte erste Fensterinhalt 9.3 ist in dem ersten Fenster 4.2 nicht vollständig dargestellt, da nur der Fensterinhalt, nicht aber der Fensterrahmen vergrößert wurde. Zum Navigieren in dem vergrößert dargestellten Inhalt wird in dem gezeigten Beispiel automatisch eine Bildlaufleiste eingeblendet.

Fig. 10 zeigt eine achte Bildschirmdarstellung 10 mit einem vergrößerten Pull-Down-Menü 10.1.

Wird durch die Berührung eines einer Funktion zugeordneten Bereichs des Touchscreens ein neuer Dialog eröffnet, so ist es vorteilhaft, die Darstellung abhängig von dem Öffnungsvorgang zu machen. Bei einer Bedienung mittels z.B. Tasten oder Maus kann ein Dialogfenster in einer Basisgröße geöffnet werden. Dieses Dialogfenster kann als vergrößerbarer Darstellungsbereich definiert werden. Bei einer weiteren Berührung des Touchscreens in einer sensiblen, zugeordneten Fläche wird die vergrößerte Darstellung veranlasst. Wird dagegen die ursprüngliche Öffnung aufgrund einer Touchscreenberührung veranlasst, so wird unmittelbar die vergrößerte Darstellung gewählt, da durch die sofortige Vergrößerung eine weitere Bedienung mittels Touchscreen erleichtert wird.

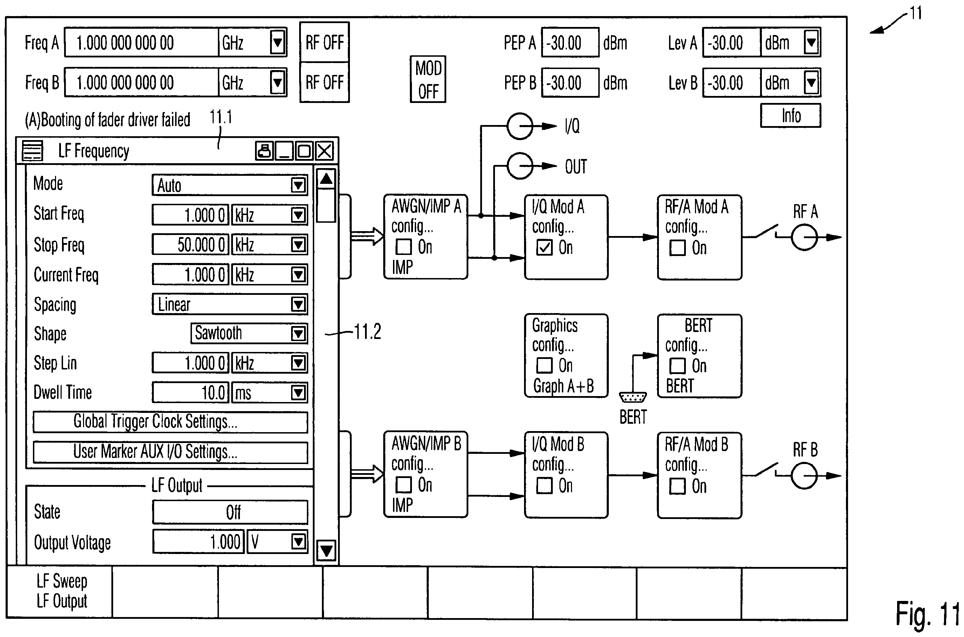

Fig. 11 zeigt eine neunte Bildschirmdarstellung 11 mit einem vergrößerbaren zweiten Fenster 11.1 und einer vergrößerten ersten Bildlaufleiste 11.2. Die vergrößerte erste Bildlaufleiste 11.2 geht aus einer vergrößerbaren ersten Bildlaufleiste (nicht dargestellt) hervor. Da die Länge der Bildlaufleiste (Scrollbar) üblicherweise mit der jeweiligen Fenstergröße übereinstimmt, wird die Länge nicht verändert. Der entsprechende Vergrößerungsfaktor wäre daher z.B. 1. Dagegen wird die Breite der Bildlaufleiste 11.2 vergrößert und ebenso die Pfeiltasten und evtl. der Schiebeknopf. Damit wird das Drücken des Schiebekopfes bzw. Schieben mittels der Pfeiltasten mit Hilfe des Tochscreens erleichtert. Grundsätzlich, jedoch, können Länge, Breite und Position der vergrößerten Bildlaufleiste 11.2 jeweils unabhängig voneinander individuell festgelegt werden. Diese Überlegungen gelten selbstverständlich auch für horizontal angeordnete Bildlaufleisten. Analog wird dort die Breite unverändert gelassen und die Höhe der Elemente geändert.

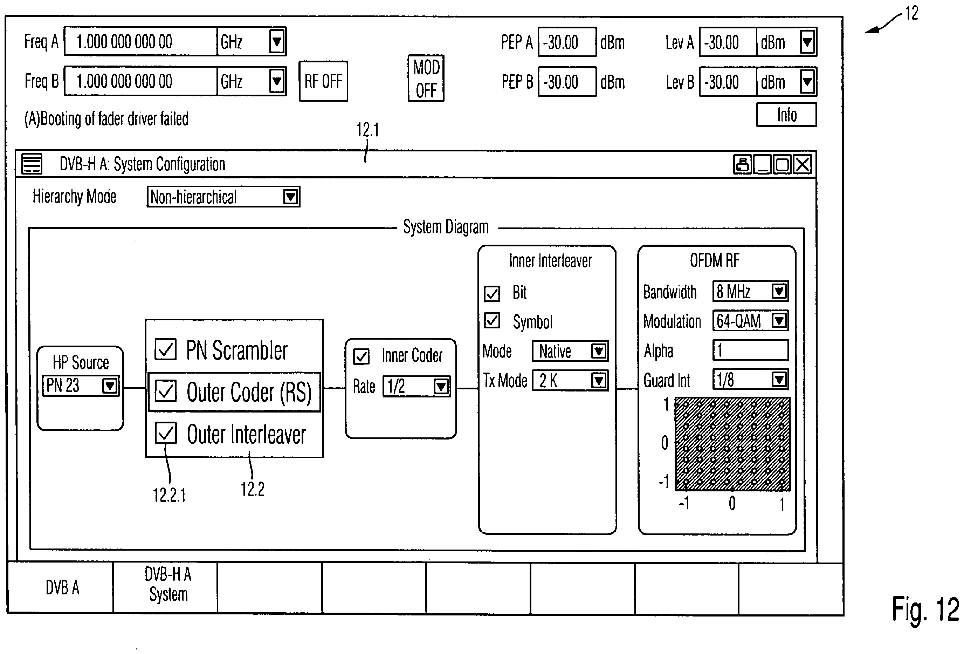

Fig. 12 zeigt eine zehnte Bildschirmdarstellung 12 mit einem dritten Fenster 12.1, mit einem vergrößerten ersten Klickboxfenster 12.2, in dem eine erste Klickbox 12.2.1 angeordnet ist. Das vergrößerte erste Klickboxfenster 12.2 geht aus einem vergrößerbaren ersten Klickboxfenster (nicht dargestellt) hervor.

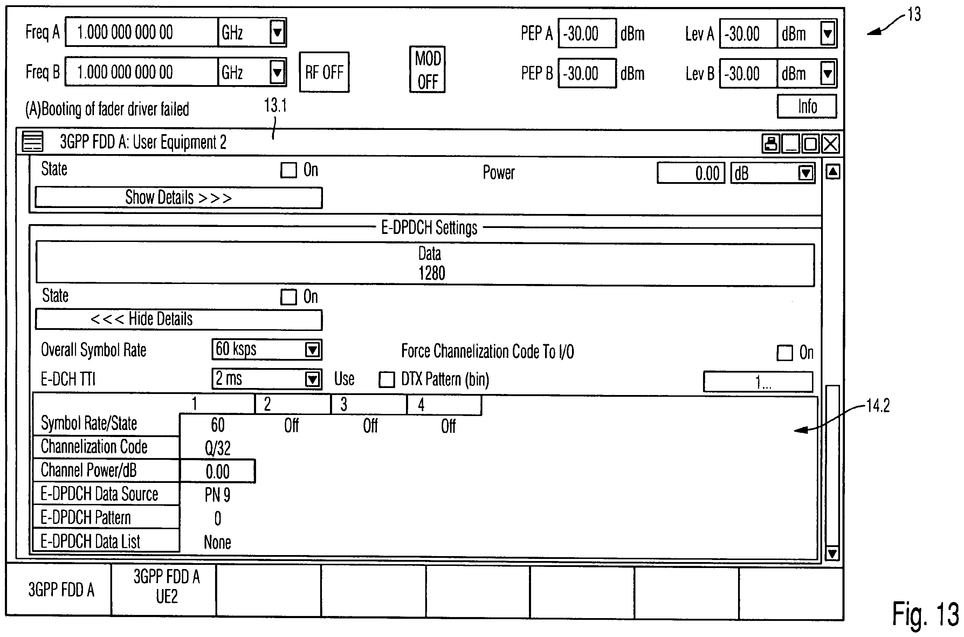

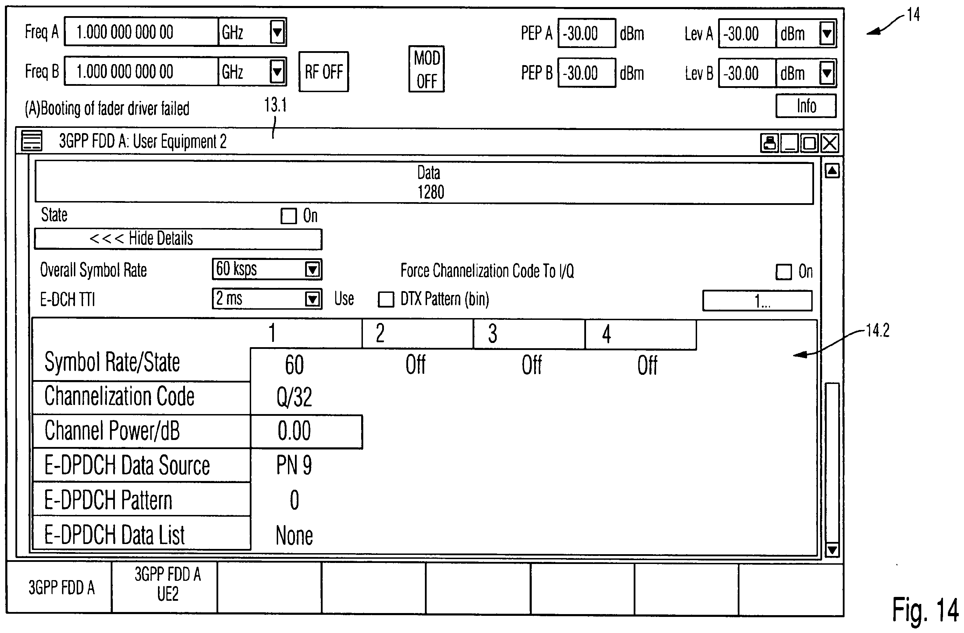

Fig. 13 zeigt eine elfte Bildschirmdarstellung 13 mit einem dritten Fenster 13.1 mit einem ersten Tabellenbereich 13.2, dem ein sensibler Bereich (nicht dargestellt) zugeordnet ist, dessen Berührung mittels Touchscreen zu einer Vergrößerung des vergrößerbaren ersten Tabellenbereichs 13.2 führt, wie in Fig. 14 gezeigt ist. Der vergrößerbare Bereich wird z.B. durch einen 5 Spalten x 6 Zeilen großen Abschnitt aus dem Tabellenbereich 13.2 definiert, der bei der Vergrößerung in dem zu Verfügung stehenden Fensterausschnitt eingepasst wird.

Es können jedoch auch lediglich einzelne Tabellenelemente oder Gruppen von Tabellenelementen des nicht vergrößerten Tabellenbereichs 13.2 vergrößert werden, wenn diese als Teilbereiche des die Tabelle bildenden Darstellungsbereichs definiert sind. Dann kann auch, wie weiter oben bereits erläutert, mit einer eingeblendeten und geeignet orientierten, z.B. horizontal oder vertikal ausgerichteten, Bildlaufleiste gescrollt werden. Damit ein Bediener sofort die gewünschten Tabellenelemente sieht, wird der Bereich des ersten Tabellenbereichs 13.2, den er z.B. mit dem Finger berührt hat (als die Tabelle noch nicht vergrößert war), nach der Vergrößerung wieder an die Position seines Fingers angezeigt. Dadurch erscheint die Tabelle um die z.B. mit dem Finger markierte Position herum vergrößert, wobei jedoch kein Lupeneffekt auftritt, da der zu vergrößernde Bereich in Bezug auf das der Berührung zugeordnete Objekt definiert ist. Ferner können einzelne Tabellenelemente oder Gruppen von Tabellenelementen einer bereits samt ihrer Tabellenelemente vergrößerten Tabelle wie bereits beschrieben weiter vergrößert werden.

Fig. 14 zeigt eine zwölfte Bildschirmdarstellung 14 mit einem vergrößerten ersten Tabellenbereich 13.2 in dem dritten Fenster 13.1. Der obere Teil des Fensterinhalts aus Fig. 12 ist hier nicht mehr sichtbar, um Platz für den vergrößerten Tabellenbereich zu schaffen.

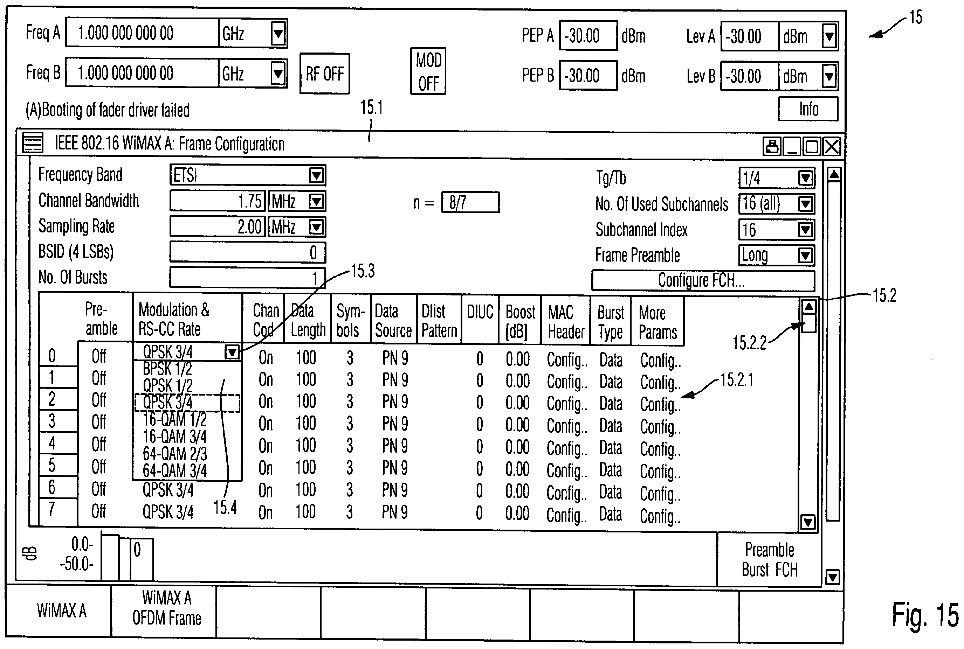

Fig. 15 zeigt eine dreizehnte Bildschirmdarstellung 15 mit einem vierten Fenster 15.1 mit einem ersten Bereich 15.2, einem vergrößerbaren zweiten Tabellenbereich 15.2.1 mit einer anpassbaren Bildlaufleiste 15.2.2, einer vergrößerbaren dritten Combo-Box 15.3 und einem dieser zugeordneten vergrößerbaren zweiten Pull-Down-Menü 15.4.

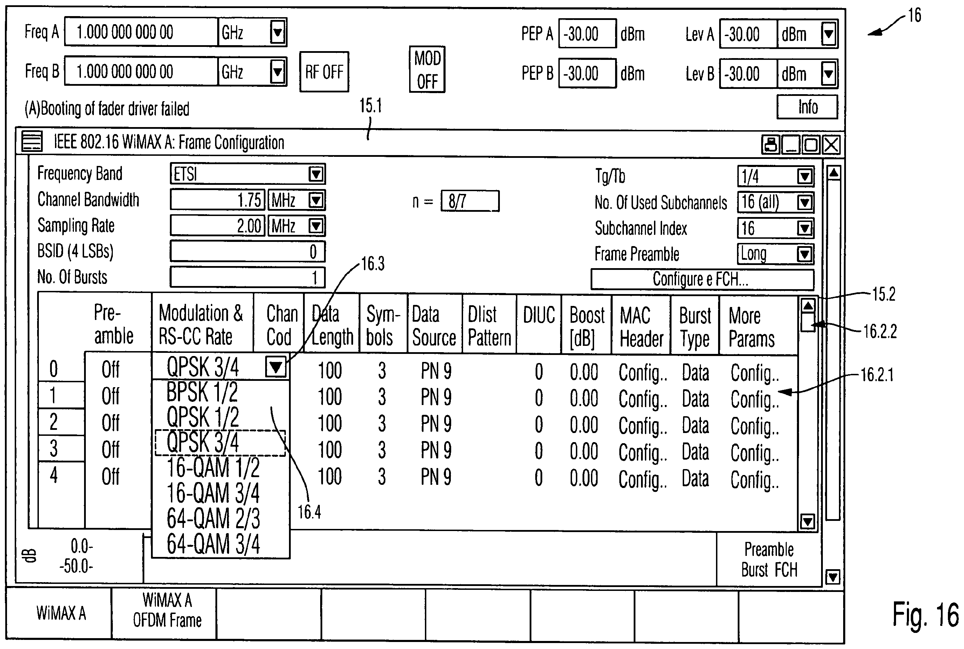

Fig. 16 zeigt eine vierzehnte Bildschirmdarstellung 16 mit dem vierten Fenster 15.1 mit dem ersten Bereich 15.2 mit einem vergrößerten zweiten Tabellenbereich 16.2.1 (entstanden aus 15.2.1) mit der angepassten Bildlaufleiste 16.2.2 (entstanden aus 15.2.2) einer in dem vergrößerten zweiten Tabellenbereich 16.2.1 noch einmal vergrößerten dritten Combo-Box 16.3 (entstanden aus 15.3) und einem dieser zugeordneten zweiten Pull-Down-Menü 16.4 (entstanden aus 15.4). Die angepasste Bildlaufleiste 16.2.2 ist nicht vergrößert. Vielmehr ist der Balken der Bildlaufleiste in seiner Größe verändert. Dadurch ist das Verhältnis zwischen der Größe der dargestellten Bereiche der vergrößerten ersten Tabelle 16.2.1 und der Gesamtgröße der vergrößerten ersten Tabelle 16.2.1 korrekt abgebildet.

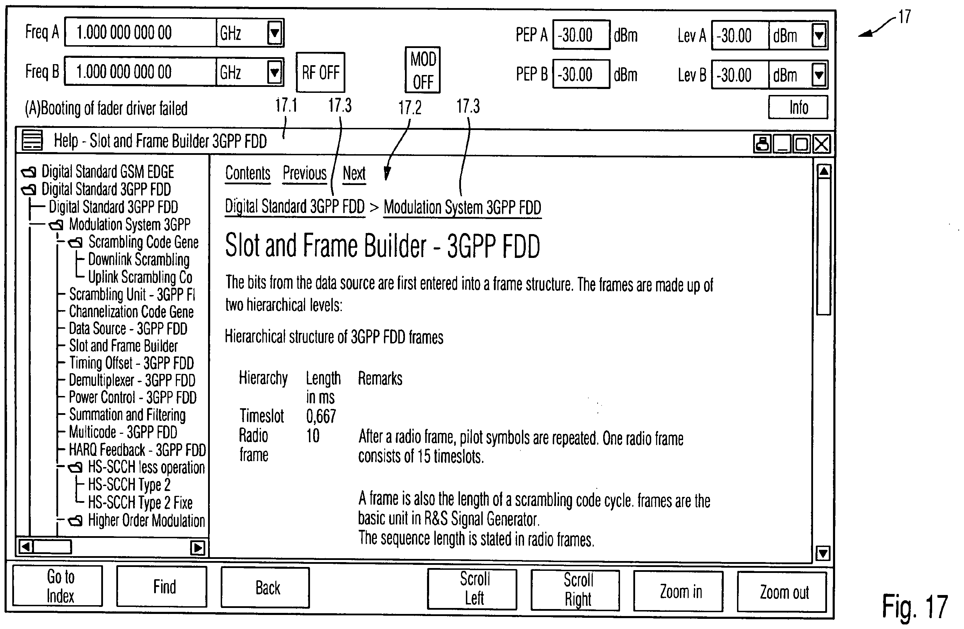

Fig. 17 zeigt eine fünfzehnte Bildschirmdarstellung 17 mit einem fünften Fenster 17.1, mit einem vergrößerbaren zweiten Bereich 17.2 und mit vergrößerbaren Links 17.3. Es sind vergrößerbare Verweise (Links) 17.3 in einem Textfenster als vergrößerbarer Darstellungsbereich 17.2 gezeigt. Hier wird analog zu den aktiven Bereichen vorgegangen. Wenn der Abstand zwischen den Links 17.3 groß genug ist, um eine sichere Auswahl mit Touchscreen zu ermöglichen, dann muss die Darstellung nicht geändert, also keine Vergrößerung angewandt werden. Wenn der Abstand jedoch zu klein ist, dann wird die Schriftgröße und/oder der Abstand der Links 17.3 voneinander erhöht. Dies kann z.B. durch einen größeren Zeilenabstand und/oder durch einen größeren seitlichen Abstand (entspricht den Wortzwischenräumen) zwischen den Links 17.3 erfolgen. Durch diese Maßnahmen wird weniger Text pro Flächeneinheit dargestellt. Eine Bildlaufleiste kann dadurch erforderlich werden. Dann kann mit einer eingeblendeten und geeignet orientierten, z.B. horizontal oder vertikal ausgerichteten, Bildlaufleiste gescrollt werden. In beiden Fällen kann zusätzlich der aktive Bereich eines Links in dem ein Touchscreensignal wirksam wird, über die sichtbare Größe des entsprechenden Links 17.3 hinaus vergrößert werden.

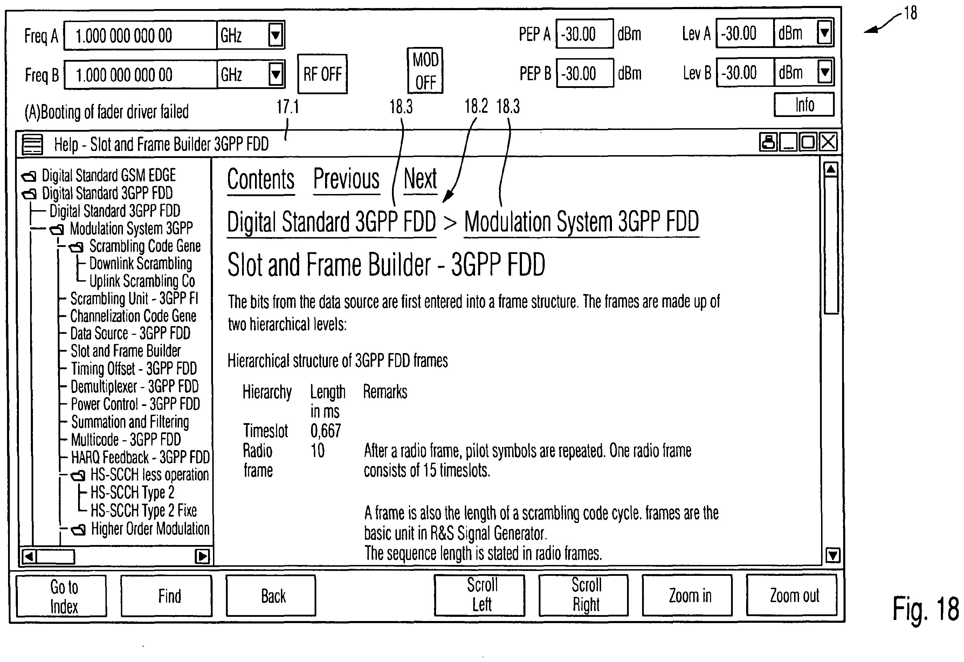

Fig. 18 zeigt eine sechzehnte Bildschirmdarstellung 18 mit dem fünften Fenster 17.1, mit dem vergrößerten zweiten Bereich 18.2 (entstanden aus 17.2) und mit den vergrößerten Links 18.3 (entstanden aus 17.3).

Es ist zu erkennen, dass dort ein nicht visuell abgegrenzter Darstellungsbereich vergrößert wurde. Der logische Zusammenhang zwischen der dargestellten reinen Textinformation und den ausführbaren Links liefert hier eine ausreichend klare räumliche Trennung.

Die vergrößerte Darstellung bleibt vorzugsweise für die Zeitdauer der Berührung plus einer bestimmten Verzögerungszeit erhalten. Durch die Verzögerungszeit bleibt die vergrößerte Darstellung auch dann erhalten, wenn der Benutzer zwischen der ersten Berührung des virtuellen Bedienelements (mit der daraufhin erfolgenden Vergrößerung) und der Auswahl einer bestimmten Stelle auf dem vergrößerten Bedienelement z.B. seinen Finger kurzzeitig abhebt. Je nach Ausführung der Touchscreenauswertung kann dieses kurzzeitige Abheben des Fingers sogar erforderlich sein. Der Benutzer kann das gewünschte Bedienelement in der vergrößerten Darstellung betätigen, d.h. z.B. drücken oder ziehen (z.B. bei einer Bildlaufleiste (Scrollbar)), und es wird die entsprechende Funktion ausgelöst oder durch Berühren eines definierten Teilbereichs dieser weiter vergrößert. Vorteilhaft beginnt mit jeder Bedienaktion innerhalb des vergrößerten Darstellungsbereichs die Verzögerungszeit wieder neu.

Bei der Bewegung eines Fingers über das Display wird der vergrößerte Bereich nicht mitgezogen. Nachdem die Darstellung des vergrößerten Bedienelements erfolgt ist, dient eine Bewegung des Fingers der Navigation oder Bedienung innerhalb des vergrößerten Bedienelements. Die Position des vergrößerten Bedienelements selbst wird dadurch nicht verändert. Sie liegt vielmehr für jeden vergrößerbaren Darstellungsbereich als Teilbereich durch Definition der Parameter für die Art der Vergrößerung fest.

Die Erfindung ermöglicht ferner die alternative Bedienung mit Tasten, Drehknopf, Joystick, Maus usw. ohne irgendwelche Einschränkungen. Dazu wird die oben beschriebene Vergrößerung von Bedienelementen bzw. Informationseinheiten in einem Ausführungsbeispiel nur dann ausgelöst, wenn das Bedienelement bzw. die Informationseinheit mit dem Touchscreen also als virtuelles Bedienelement ausgewählt wird, jedoch nicht, wenn dies mit Maus, Tasten o.ä. geschieht. Dadurch bleibt der Vorteil der Bedienung mit Tasten, Drehknopf, Joystick, Maus usw. - nämlich dass virtuelle Bedienelemente relativ klein dargestellt werden können - voll erhalten.

Die Erfindung ist nicht auf die dargestellten Ausführungsbeispiele beschränkt. Vielmehr sind auch einzelne Merkmale der Ausführungsbeispiele vorteilhaft miteinander kombinierbar.

Die Erfindung wird durch die Merkmale des unabhängigen Anspruchs definiert.

## Patentansprüche

1. Verfahren zur Vergrößerung zumindest eines Darstellungsbereichs auf einer Darstellungseinrichtung (1.4) eines Messgeräts, mit folgenden Verfahrensschritten:
- Definieren von mindestens zwei vergrößerbaren Darstellungsbereichen (2.1),
- Auswerten einer Touchscreenberührung (2.5),
- Zuordnen des so erhaltenen Touchscreensignals zu einem zu vergrößernden vergrößerbaren Darstellungsbereich (2.6) und
- Vergrößern dieses zu vergrößernden vergrößerbaren Darstellungsbereichs (2.7), wobei eine Art der Vergrößerung für jeden vergrößerbaren Darstellungsbereich individuell festgelegt wird,
**dadurch gekennzeichnet,**
**dass** die Art der Vergrößerung in Abhängigkeit von der Größe und/oder Form und/oder Orientierung und/oder Lage des zu vergrößernden Darstellungsbereichs a priori festgelegt wird, und
**dass** die Art der Vergrößerung eine Veränderung geometrischer Faktoren, und zugleich
eine Veränderung der Schriftart und/oder Schriftgröße und/oder eine Veränderung eines Zeilenabstands und/oder Zeilenumbruchs umfasst,
wobei die Veränderung der Schriftart und/oder der Schriftgröße und/oder der Veränderung des Zeilenabstands und/oder des Zeilenumbruchs unabhängig von der Veränderung geometrischer Faktoren des zu vergrößernden Darstellungsbereichs ist.

2. Verfahren nach Anspruch 1,
**dadurch gekennzeichnet,**
**dass** in einem vergrößerbaren und/oder vergrößerten Darstellungsbereich ein vergrößerter und/oder weiter vergrößerbarer Darstellungsbereich als vergrößerbarer Teilbereich des vergrößerbaren und/oder vergrößerten Darstellungsbereichs definiert wird (2.2).

3. Verfahren nach einem der Ansprüche 1 oder 2,
**dadurch gekennzeichnet,**
**dass** die Art der Vergrößerung jeweils eines zu vergrößernden Darstellungsbereichs durch mehrere unabhängige Parameter festgelegt wird.

4. Verfahren nach einem der Ansprüche 1 bis 3,
**dadurch gekennzeichnet,**
**dass** die Art der Vergrößerung abhängig von dem Inhalt des zu vergrößernden vergrößerbaren Darstellungsbereichs festgelegt wird.

5. Verfahren nach einem der Ansprüche 1 bis 4,
**dadurch gekennzeichnet,**
**dass** der vergrößert darzustellende Darstellungsbereich zumindest ein Bedienelement und/oder eine Informationseinheit enthält.

6. Verfahren nach einem der Ansprüche 1 bis 5,
**dadurch gekennzeichnet,**
**dass** eine Bildlaufleiste als vergrößerbarer Darstellungsbereich definiert wird (2.8.1).

7. Verfahren nach einem der Ansprüche 1 bis 6,
**dadurch gekennzeichnet,**
**dass** eine Bildlaufleiste bei einer Vergrößerung eines vergrößerbaren Darstellungsbereichs oder eines vergrößerbaren Teilbereichs, bei der nicht der gesamte Darstellungsbereich gleichzeitig vergrößert dargestellt wird, automatisch auf dem Display eingeblendet wird, sodass ein Inhalt des vergrößerten Darstellungsbereichs gescrollt werden kann (2.8).

8. Verfahren nach einem der Ansprüche 1 bis 7, **dadurch gekennzeichnet,**
**dass** die Art der Vergrößerung durch wenigstens einen Parameter beeinflussbar ist, der einstellbar ist.

9. Verfahren nach einem der Ansprüche 1 bis 8, **dadurch gekennzeichnet,**
**dass** die Vergrößerung nach Ablauf einer bestimmten Zeit oder nach einer dafür vorgesehenen Berührung des Touchscreens rückgängig gemacht wird.

## Claims

1. Method for enlarging at least one display region on a display unit (1.4) of a measuring device, with the following method steps:
- definition of at least two enlargeable display regions (2.1),
- evaluation of a touch of a touch screen (2.5),
- assignment of the touch screen signal so received to an enlargeable display region to be enlarged (2.6) and
- enlargement of this enlargeable display region to be enlarged (2.7), wherein a form of enlargement is fixed for each enlargeable display region individually,
**characterised in that**
the form of enlargement is fixed *a priori* dependent on the size and/or shape and/or orientation and/or location of the display region to be enlarged, and
**in that** the form of enlargement comprises alteration of geometric factors, and at the same time
alteration of the type style and/or type size and/or alteration of the line spacing and/or line make-up,
wherein the alteration of the type style and/or the type size and/or the alteration of the line spacing and/or the line make-up is independent of the alteration of geometric factors of the display region to be enlarged.

2. Method according to claim 1,
**characterised in that**
in an enlargeable and/or enlarged display region an enlarged and/or further enlargeable display region is defined as an enlargeable part region of the enlargeable and/or enlarged display region (2.2).

3. Method according to one of claims 1 or 2,
**characterised in that**
in each case the form of enlargement of a display region to be enlarged is fixed by a plurality of independent parameters.

4. Method according to one of claims 1 to 3,
**characterised in that**
the form of enlargement is fixed dependent on the content of the enlargeable display region to be enlarged.

5. Method according to one of claims 1 to 4,
**characterised in that**
the display region to be shown enlarged comprises at least one control element and/or one unit of information.

6. Method according to one of claims 1 to 5,
**characterised in that**
a scroll bar is defined as an enlargeable display region (2.8.1).

7. Method according to one of claims 1 to 6,
**characterised in that**
in the case of an enlargement of an enlargeable display region or an enlargeable part region during which the entire display region is not shown enlarged at the same time, a scroll bar is automatically added to the display so that a content of the enlarged display region can be scrolled (2.8).

8. Method according to one of claims 1 to 7,
**characterised in that**
the form of the enlargement can be influenced by at least one parameter which is adjustable.

9. Method according to one of claims 1 to 8,
**characterised in that**
the enlargement is reversed after a certain time has elapsed or after the touch screen is touched for that purpose.

## Revendications

1. Procédé d'agrandissement d'au moins une zone de représentation sur un dispositif de représentation (1,4) d'un instrument de mesure, avec les étapes de procédé suivantes :
- définition d'au moins deux zones de représentation agrandissables (2,1),
- analyse d'un toucher d'écran tactile (2,5),
- attribution du signal d'écran tactile ainsi obtenu à une zone de représentation agrandissable à agrandir (2,6) et
- agrandissement de cette zone de représentation agrandissable à agrandir (2,7), dans lequel un type d'agrandissement est déterminé individuellement pour chaque zone de représentation agrandissable,
**caractérisé en ce que**,
le type d'agrandissement est déterminé *a priori* en fonction de la dimension et/ou de la forme et/ou de l'orientation et/ou de la situation de la zone de représentation à agrandir, et
le type d'agrandissement comprend une modification de facteurs géométriques, et en même temps une modification de la police de caractères et/ou de la taille de caractères et/ou une modification d'un interligne et/ou d'un retour à la ligne,
dans lequel la modification de la police de caractères et/ou de la taille de caractères et/ou la modification de l'interligne et/ou du retour à la ligne n'est pas fonction de la modification de facteurs géométriques de la zone de représentation à agrandir.

2. Procédé selon la revendication 1,
**caractérisé en ce que**,
dans une zone de représentation agrandissable et/ou agrandie, une zone de représentation agrandie et/ou encore agrandissable est définie en tant que zone partielle agrandissable de la zone de représentation agrandissable et/ou agrandie (2,2).

3. Procédé selon l'un des revendications 1 ou 2,
**caractérisé en ce que**,
le type d'agrandissement d'une zone de représentation à agrandir respective est déterminé par plusieurs paramètres indépendants.

4. Procédé selon l'un des revendications 1 à 3,
**caractérisé en ce que**,
le type d'agrandissement est déterminé en fonction du contenu de la zone de représentation agrandissable à agrandir.

5. Procédé selon l'un des revendications 1 à 4,
**caractérisé en ce que**,
la zone de représentation agrandie à représenter contient au moins un élément de commande et/ou une unité d'information.

6. Procédé selon l'un des revendications 1 à 5,
**caractérisé en ce que**,
une barre de déroulement est définie en tant que zone de représentation agrandissable (2.8.1).

7. Procédé selon l'un des revendications 1 à 6,
**caractérisé en ce que**,
une barre de déroulement est automatiquement affichée à l'écran lors d'un agrandissement d'une zone de représentation agrandissable ou d'une zone partielle agrandissable, chez laquelle l'ensemble de la zone de représentation n'est pas simultanément représentée agrandie, de telle sorte qu'un contenu de la zone de représentation agrandie peut être déroulé (2,8).

8. Procédé selon l'un des revendications 1 à 7,
**caractérisé en ce que**,
le type d'agrandissement peut être influencé par au moins un paramètre qui est réglable.

9. Procédé selon l'un des revendications 1 à 8,
**caractérisé en ce que**,
l'agrandissement est annulé après l'écoulement d'un certain temps ou après un toucher prévu à cet effet de l'écran tactile.
